# EUROPEAN PATENT SPECIFICATION

(11) **EP 1 300 659 B1**
(45) Date of publication and mention of the grant of the patent: **22.03.2006**
(21) Application number: 02022045.5
(22) Date of filing: 01.10.2002
(51) Int. Cl.: G01F 9/00, D06F 75/12

(54) **Device to determine the quantity of liquid left in a domestic steam generator**
Gerät zur Feststellung der Restflüssigkeitsmenge in einem Haushaltsdampferzeuger
Dispositif pour déterminer la quantité de liquide résiduelle dans un générateur de vapeur ménager

(30) Priority: 02.10.2001 IT UD20010159
(43) Date of publication of application: 09.04.2003
(73) Proprietor: De'Longhi S.p.A., 31100 Treviso (IT)
(72) Inventor: Baldo, Massimo, 31055 Quinto di Treviso (TV) (IT); Monaci, Simone, 30038 Spinea (VE) (IT)
(74) Representative: Petraz, Gilberto Luigi

(56) References cited:
- EP-A- 0 843 039
- EP-A- 0 849 521
- US-A- 5 881 207

## Description

### FIELD OF THE INVENTION

The present invention concerns a device and an associated method to determine the quantity of liquid contained in a container, such as a boiler to produce steam or a water tank, associated with a domestic appliance, such as an ironing apparatus, an iron, a cleaning apparatus or other similar appliances. The device according to the invention comprises an electronic circuit provided with a microprocessor and connected to an electrovalve or a pump, which can be actuated by the user, to control the selective delivery of steam or water. The overall time for which the electrovalve or the pump is kept activated is calculated, and this allows to determine the quantity of water expelled and consequently the quantity of water remaining in the container and also allows to supply the user with the relative information.

### BACKGROUND OF THE INVENTION

Nowadays there are innumerable domestic appliances which use water or steam, both for ironing and for cleaning floors, walls, articles of furniture or suchlike.

The water is usually contained in a tank and possibly transformed into steam by means of a pressurized boiler, where the water is heated by electric resistances which can be selectively energized.

The capacity of the water container, whether it be a tank or a boiler, depends on the type of domestic appliance and varies from less than a liter, when the container is for example incorporated into an iron, to several liters, when it is autonomous or associated with a cleaning apparatus.

In every case, a big disadvantage which users complain of, especially those who have to iron without interruption large quantities of garments and bed linen or towels, or have to clean many rooms or extensive surfaces, is when there is suddenly no more steam or water, because the water Contained in the container, whether big or small, is finished, without any warning signal or any information on the quantity of water remaining in the container being supplied in advance to the user.

EP-A-0843039 discloses a steam generator which comprises an evaporation boiler provided with heating elements and fed with water by a pump, an electrically-controlled valve actuated by a button for expelling steam, and a regulator, in the form of a temperature or pressure sensor, to monitor the amount of water in the boiler and to actuate the pump. The regulator is connected to a microprocessor which carries out a succession of measures and operates the pump as a function of the slope of the curve of temperature of, or pressure in, the boiler. The microprocessor is also able to calculate the time of actuation of the electrically-controlled valve, even if the related time value is not used to determine the quantity of water still present in the boiler.

The present Applicant has devised and embodied this invention to overcome this shortcoming and to obtain further advantages.

### SUMMARY OF THE INVENTION

The invention is set forth and characterized in the independent claims, while the dependent claims describe specific embodiments of the invention.

One purpose of the present invention is to achieve a device, and to perfect an associated method, which allow to determine, simply, automatically and accurately, the quantity of liquid remaining in a container, possibly associated with steam production means, in a domestic appliance and which at the same time can supply clear and complete information to the user on said remaining quantity.

Another purpose of the present invention is to achieve a device which, according to the detection performed, will display on a suitable display means, clearly and so that the user can easily understand, all the information inherent to the so-called "reserve" of steam, that is, the quantity of steam still available before the liquid is finished. And the device according to the invention will do this both when the domestic appliance is first switched on and at every subsequent moment.

The technical problem of detecting the quantity of liquid remaining in a container, without installing inside it a level measurer which is notoriously complex and costly, is not easy to solve, especially when the container consists of a pressurized boiler, since it is unthinkable to install a level measurer inside the boiler itself.

In accordance with these purposes and to resolve the afore-said technical problem, the device according to the invention comprises an electronic circuit which is connected to feed means, selectively actuated, which cause the water to emerge from the tank, or the steam from the boiler, and is provided with means to reckon the time said feed means are actuated, in order to calculate, in correlation with a determined unitary flow of said feed means, the quantity of liquid consumed and, by subtraction with respect to the maximum quantity loaded, the quantity of liquid still remaining in the boiler.

Advantageously the feed means can comprise a pump, for example electric, to deliver the water, or an electrovalve to deliver the steam, actuated by an actuator, such as for example a button, a pedal, a slider, a lever or similar, which can be actuated directly by the user.

The means to reckon the time can comprise advantageously a microprocessor, while the display means can comprise a liquid crystal display, with or without rear illumination, or a display with lamps or luminous segments.

The display means can also be provided with fixed images, like icons, which supply the user, by means of luminous or non-luminous means, with information on the quantity of liquid still available in the boiler or the tank; information on the iron possibly associated with the container; information that the boiler has been switched on and that steam is available; information on the need to carry out maintenance of the plant to remove any limestone which has possibly formed in the boiler or to replace any worn or worn out element of the domestic appliance, such as the plate of the iron or the filters of a cleaning apparatus. This maintenance can be programmed for example according to the number of hours of use of the apparatus with which the device according to the invention is associated.

The electronic circuit is advantageously reset, that is, zeroed, automatically or manually every time the boiler is refilled.

Moreover, the electronic circuit can be connected to a conventional thermostat already used to signal, with a "water finished" signal, that the boiler is completely empty. In this case, for safety reasons, the thermostat will prevail over the data processed by the reckoning means and will signal to the user that it is necessary to refill the boiler in any case, even if the "water reserve" signal has not yet been emitted.

The electronic circuit is also provided with a permanent memory, wherein the data calculated is maintained even when there is no electric feed, so that every time the domestic appliance is switched on, the previously memorized data will be displayed to the user, without further reckoning and without the previously processed information being lost.

The electronic circuit can also be associated with a timer and a clock, as it can be equipped with means able to detect and signal the temperature of the ironing plate of the iron or, in the case of cleaning apparatuses, that the suction means or filters for the dirt are functioning correctly.

### BRIEF DESCRIPTION OF THE DRAWINGS

These and other characteristics of the invention will be apparent from the following description of a preferential form of embodiment of the invention, given as a non-restrictive example with reference to the attached drawings wherein:
- Fig. 1: is a schematic representation of an ironing apparatus on which a device according to the invention is mounted;
- Fig. 2: is a block diagram of a device according to the invention.

### DETAILED DESCRIPTION OF A PREFERENTIAL EMBODIMENT

With reference to the attached drawings, a device 10 according to the invention is shown applied to an ironing apparatus 20 which comprises a steam generator 21 able to produce steam, connected to an iron 22 by means of a tube 23.

The steam generator 21 comprises in turn a container 25, which can function as a simple tank for the water or as a boiler, and an electric resistance 26 which can be selectively energized.

The iron 22 is provided with a button 29, able to be actuated manually by the user to control the delivery of the water or steam arriving from the steam generator 21 through nozzles 30 arranged in the ironing plate 31.

A feed means 33 consisting of an electrovalve or an electric pump is associated with the tube 23 in correspondence with the steam generator 21, to cause the selective delivery of steam, or respectively of water, controlled by the button 29 through the nozzles 30.

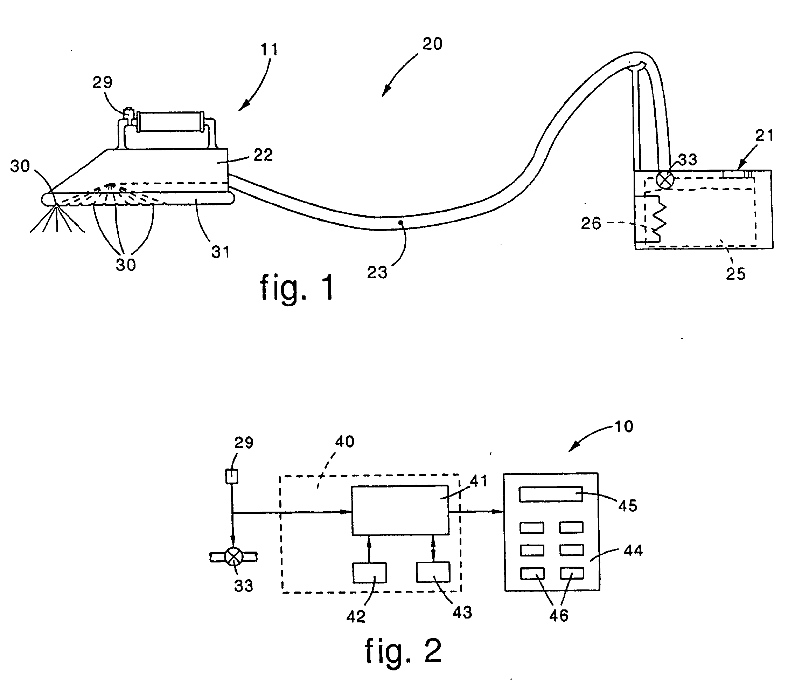

The device 10 (Fig. 2) also comprises an electronic circuit 40 connected to the button 29, or to the feed means 33, and comprising in turn a calculation unit 41, for example a microprocessor, a timer 42 and a permanent nonvolatile memory 43. The calculation unit 41 is connected to a display unit 44 having a display 45 able to supply the user with information concerning the "reserve" of water contained in the container 25, that is, the quantity of water or steam which can still be delivered from the steam generator 21. Advantageously the display unit 44 also comprises one or more icons 46 by means of which further information on the apparatus 20 with which the device 10 is associated is supplied to the user.

The circuit 40 and the display unit 44 can be installed at any point of the apparatus 20, so that at least the display unit 44 can easily be consulted by the user. To be more exact, the display 45 can be installed either on the iron 22 or near the steam generator 21.

Every time the container 25 of the steam generator 21 is filled, the electronic circuit 40 is reset, either manually or automatically. The calculation unit 41 is programmed to reckon the time during which the feed means 33 remains activated, controlled by the button 29. Depending on the unitary consumption of water, also possibly in the form of steam, passing through said feed means 33, the consumption thereof is calculated and, by subtraction with respect to the capacity of the container 25, a "steam reserve" signal is generated, which indicates to the user that from that moment to a defined time, which can even be set by the user, the steam generator 21 will stop delivering water or steam. It will be the user him/herself who will decide whether, with this "reserve", he/she will be able to continue working, or whether it is better to fill the container 25 before continuing.

It is clear that modifications and/or additions of parts can be made to the device 10 as described heretofore, without departing from the field of the invention.

It is also clear that, although the invention has been described with reference to a specific example, a skilled person in the art shall certainly be able to achieve many other equivalent forms of device to determine the quantity of liquid contained in a container associated with a domestic appliance, having the features set forth in at least one of the following claims and coming therefore within the field of protection defined thereby.

## Claims

1. A device to determine the quantity of liquid contained in a container (25) associated with a domestic appliance (20), comprising:
- a steam generator (21) with a liquid container (25),
- a domestic appliance (20) receiving liquid, or steam produced therefrom, from said steam generator (21),
- feed means (33) for feeding liquid, or steam produced therefrom, from said steam generator (21) to said domestic appliance (20),
- actuation means (29) selectively controlling said feed means (33),
- an electronic circuit (40) provided with calculation means (41), associated with said feed means (33),
- means for determining the overall time said feed means (33) are actuated,
**characterized by**
- means to determine, in relation to the unitary flow of said feed means (33), the quantity of liquid delivered and, by subtraction with respect to the maximum quantity loaded, the quantity of liquid still contained in said container (25).

2. Device as in claim 1, **characterized in that** said feed means (33) comprise an electrovalve.

3. Device as in claim 1, **characterized in that** said feed means (33) comprise a pump, advantageously electric.

4. Device as in any claim hereinbefore, **characterized in that** said actuation means comprises a button (29) which can be actuated by the user of said domestic appliance (20).

5. Device as in any claim hereinbefore, **characterized in that** said calculation means (41) comprise a microprocessor.

6. Device as in any claim hereinbefore, **characterized in that** said electronic circuit (40) is associated with display means (44) able to display the data relating to the quantity of liquid contained in said container (25) processed by said calculation means (41).

7. Device as in claim 6, **characterized in that** said display means (44) comprise a display (45).

8. Device as in claim 6 or 7, **characterized in that** said display means (44) comprise one or more fixed images (46).

9. Device as in any claim from 6 to 8 inclusive, **characterized in that** said display means (44) selectively supplies the user with further information on said domestic appliance (20) associated with said steam generator (21).

10. Device as in any claim hereinbefore, **characterized in that** said electronic circuit (40) is reset automatically or manually every time said container (25) is filled.

11. Device as in any claim hereinbefore, **characterized in that** said electronic circuit (40) also comprises a permanent memory (43) wherein the data calculated by said calculation means (41) are maintained even when there is no electric feed.

12. Device as in any claim hereinbefore, **characterized in that** said electronic circuit (40) also comprises a timer (42).

13. A method to determine the quantity of liquid contained in a container (25) of a steam generator (21) associated with a domestic appliance (20), comprising the following steps:
- using an actuation means (29) to selectively actuate feed means (33) to control the delivery of the liquid, or steam produced therefrom, from the container (25) to the domestic appliance (20),
- determining the overall time said feed means (33) are actuated,
**characterized by**
- using the determined unitary flow of said feed means (33) to calculate the quantity of liquid delivered by said feed means (33) and, by subtraction with respect to the maximum quantity loaded, the quantity of liquid still contained in said container (25) of said steam generator (21).

14. Method as in claim 13, **characterized in that** the data relating to the quantity of liquid contained in said container (25) processed by said calculation means (41) is displayed by means of display means (44).

## Patentansprüche

1. Vorrichtung zur Feststellung der in einem mit einem Elektrohaushaltsgerät (20) verbundenen Behälter (25) enthaltenen Flüssigkeitsmenge, welche
- einen Dampferzeuger (21) mit einem Flüssigkeitsbehälter (25),
- ein Elektrohaushaltsgerät (20), das die Flüssigkeit oder den durch die Flüssigkeit erzeugten Dampf von diesem Dampferzeuger (21) erhält,
- Speisemittel (33) für die Speisung der Flüssigkeit oder des durch die Flüssigkeit erzeugten Dampfs, von diesem Dampferzeuger (21) bis zu diesem Elektrohaushaltsgerät (20),
- Treibmittel (29), die diese Speisemittel (33) selektiv steuern,
- eine mit Rechenmitteln (41) versehene Elektronik-Schaltung (40), die mit diesen Speisemitteln (33) verbunden ist, und
- Mittel zur Feststellung der gesamten Antriebszeit dieser Speisemittel (33)
umfasst, **gekennzeichnet durch**
- Mittel zur Feststellung der gelieferten Flüssigkeitsmenge mit Bezug auf die Einheitsförderleistung dieser Speisemittel (33) und der in diesem Behälter (25) noch enthaltenen Flüssigkeitsmenge **durch** den Unterschied von der höchsten Füllmenge.

2. Vorrichtung nach Anspruch 1, **dadurch gekennzeichnet, daß** diese Speisemittel (33) ein Magnetventil umfassen.

3. Vorrichtung nach Anspruch 1, **dadurch gekennzeichnet, daß** diese Speisemittel (33) eine Pumpe, vorteilhaft eine Elektropumpe umfassen.

4. Vorrichtung nach dem einen oder dem anderen der vorhergehenden Ansprüche, **dadurch gekennzeichnet, daß** diese Treibmittel einen Druckknopf (29) umfassen, welcher durch den Verbraucher dieses Elektrohaushaltsgeräts (20) angetrieben werden kann.

5. Vorrichtung nach dem einen oder dem anderen der vorhergehenden Ansprüche, **dadurch gekennzeichnet, daß** diese Rechenmittel (41) einen Mikroprozessor umfassen.

6. Vorrichtung nach dem einen oder dem anderen der vorhergehenden Ansprüche, **dadurch gekennzeichnet, daß** diese Elektronik-Schaltung (40) mit Anzeigemitteln (44) verbunden ist, die dazu geeignet sind, die der in diesem Behälter (25) enthaltenen Flüssigkeitsmenge entsprechenden und durch diese Rechenmittel (41) verarbeiteten Daten darzustellen.

7. Vorrichtung nach Anspruch 6, **dadurch gekennzeichnet, daß** diese Anzeigemittel (44) eine Anzeige (45) umfassen.

8. Vorrichtung nach Anspruch 6 oder 7, **dadurch gekennzeichnet, daß** diese Anzeigemittel (44) eine oder mehrere feste Abbildungen (46) umfassen.

9. Vorrichtung nach dem einen oder dem anderen der vorhergehenden Ansprüche, **dadurch gekennzeichnet, daß** diese Anzeigemittel (44) dem Verbraucher weitere Auskunft über dieses mit diesem Dampferzeuger (21) verbundene Elektrohaushaltsgerät (20) selektiv erteilen.

10. Vorrichtung nach dem einen oder dem anderen der vorhergehenden Ansprüche, **dadurch gekennzeichnet, daß** diese Elektronik-Schaltung (40) zu jeder Füllung dieses Behälters (25) automatisch oder mit der Hand rückgesetzt wird.

11. Vorrichtung nach dem einen oder dem anderen der vorhergehenden Ansprüche, **dadurch gekennzeichnet, daß** diese Elektronik-Schaltung (40) auch einen Dauerspeicher (43) umfasst, in dem die durch diese Rechenmittel (41) berechneten Daten auch bei Ausfall der Stromzuführung sichergestellt sind.

12. Vorrichtung nach dem einen oder dem anderen der vorhergehenden Ansprüche, **dadurch gekennzeichnet, daß** diese Elektronik-Schaltung (40) auch einen Zeitgeber (42) umfasst.

13. Verfahren zur Feststellung der in einem Behälter (25) eines mit einem Elektrohaushaltsgerät (20) verbundenen Dampferzeugers (21) enthaltenen Flüssigkeitsmenge, welche folgende Schritte umfasst:
- Verwendung von Treibmitteln (29) zum selektiven Antrieb von Speisemitteln (33) zur Steuerung der Lieferung der Flüssigkeit oder des durch die Flüssigkeit erzeugten Dampfs, vom Behälter (25) bis zum Elektrohaushaltsgerät (20), und
- Feststellung der gesamten Antriebszeit dieser Speisemittel (33),
**gekennzeichnet durch**
- die Verwendung der festgestellten Einheitsförderleistung dieser Speisemittel (33) zur Berechnung der **durch** diese Speisemittel (33) gelieferten Flüssigkeitsmenge und der in diesem Behälter (25) dieses Dampferzeugers (21) noch enthaltenen Flüssigkeitsmenge **durch** den Unterschied von der höchsten Füllmenge.

14. Verfahren nach Anspruch 13, **dadurch gekennzeichnet, daß** die der in diesem Behälter (25) enthaltenen Flüssigkeitsmenge entsprechenden und durch diese Rechenmittel (41) verarbeiteten Daten durch Anzeigemittel (44) dargestellt sind.

## Revendications

1. Dispositif pour déterminer la quantité de liquide contenue dans un récipient (25) associé à un appareil électroménager (20), comprenant :
- un générateur de vapeur (21) doté d'un récipient à liquide (25),
- un appareil électroménager (20) recevant du liquide, ou de la vapeur produite par celui-ci, dudit générateur de vapeur (21),
- des moyens d'alimentation (33) pour amener du liquide, ou de la vapeur produite par celui-ci, dudit générateur de vapeur (21) audit appareil électroménager (20),
- des moyens d'actionnement (29) contrôlant sélectivement lesdits moyens d'alimentation (33),
- un circuit électronique (40) pourvu de moyens de calcul (41), associé auxdits moyens d'alimentation (33),
- des moyens permettant de déterminer le temps total d'actionnement desdits moyens d'alimentation (33),
**caractérisé par**
- des moyens permettant de déterminer, en fonction du débit unitaire desdits moyens d'alimentation (33), la quantité de liquide distribuée et, en la soustrayant de la quantité maximale introduite, la quantité de liquide encore contenue dans ledit récipient (25).

2. Dispositif selon la revendication 1, **caractérisé en ce que** lesdits moyens d'alimentation (33) comprennent une électrovalve.

3. Dispositif selon la revendication 1, **caractérisé en ce que** lesdits moyens d'alimentation (33) comprennent une pompe, avantageusement électrique.

4. Dispositif selon l'une quelconque des revendications ci-dessus, **caractérisé en ce que** lesdits moyens d'actionnement comprennent un bouton (29) qui peut être actionné par l'utilisateur dudit appareil électroménager (20).

5. Dispositif selon l'une quelconque des revendications ci-dessus, **caractérisé en ce que** lesdits moyens de calcul (41) comprennent un microprocesseur.

6. Dispositif selon l'une quelconque des revendications ci-dessus, **caractérisé en ce que** ledit circuit électronique (40) est associé à des moyens d'affichage (44) aptes à afficher les données relatives à la quantité de liquide contenue dans ledit récipient (25) et traitées par lesdits moyens de calcul (41).

7. Dispositif selon la revendication 6, **caractérisé en ce que** lesdits moyens d'affichage (44) comprennent un écran (45).

8. Dispositif selon la revendication 6 ou 7, **caractérisé en ce que** lesdits moyens d'affichage (44) comprennent une ou plusieurs images fixes (46).

9. Dispositif selon l'une quelconque des revendications 6 à 8 incluse, **caractérisé en ce que** lesdits moyens d'affichage (44) fournissent sélectivement à l'utilisateur des informations supplémentaires sur ledit appareil électroménager (20) associé audit générateur de vapeur (21).

10. Dispositif selon l'une quelconque des revendications ci-dessus, **caractérisé en ce que** ledit circuit électronique (40) est réinitialisé automatiquement ou manuellement à chaque remplissage dudit récipient (25).

11. Dispositif selon l'une quelconque des revendications ci-dessus, **caractérisé en ce que** ledit circuit électronique (40) comprend aussi une mémoire permanente (43) dans laquelle sont conservées les données calculées par lesdits moyens de calcul (41), même en l'absence d'alimentation électrique.

12. Dispositif selon l'une quelconque des revendications ci-dessus, **caractérisé en ce que** ledit circuit électronique (40) comprend aussi un temporisateur.

13. Procédé pour déterminer la quantité de liquide contenue dans un récipient (25) d'un générateur de vapeur (21) associé à un appareil électroménager (20), comprenant les étapes suivantes :
- l'utilisation de moyens d'actionnement (29) pour actionner sélectivement des moyens d'alimentation (33) destinés à contrôler la distribution du liquide, ou de la vapeur produite de celui-ci, du récipient (25) à l'appareil électroménager (20),
- la détermination du temps total d'actionnement desdits moyens d'alimentation (33),
**caractérisé par**
- l'utilisation du débit unitaire déterminé desdits moyens d'alimentation (33) pour calculer la quantité de liquide distribuée par lesdits moyens d'alimentation (33) et, en la soustrayant de la quantité maximale introduite, la quantité de liquide encore contenue dans ledit récipient (25) dudit générateur de vapeur (21).

14. Procédé selon la revendication 13, **caractérisé en ce que** les données relatives à la quantité de liquide contenue dans ledit récipient (25) et traitées par lesdits moyens de calcul (41) est affichée à l'aide de moyens d'affichage (44).
